# EUROPEAN PATENT APPLICATION

(11) **EP 0 585 507 A1**
(43) Date of publication of application: **09.03.1994**
(21) Application number: 92830463.3
(22) Date of filing: 31.08.1992
(51) Int. Cl.: B65G 65/00, B65G 49/08

(54) **Apparatus for stacking and conveying metal bars destined for surface-hardening treatment**

(71) Applicant: ALUTITAN S.A., I-47031 Chiesanuova (SM)
(72) Inventor: Vincenzo, Farchica, Medicina (BO) (IT)
(74) Representative: Lanzoni, Luciano

(57) **Abstract**

The invention relates to an apparatus (13) for the stacking and conveying of metal bars (2) destined for surface-hardening heat treatment, comprising:
- a horizontal feeding device (1) for the said bars (2);
- a mobile structure (3) for vertically stacking and transporting the said bars (2), associable with the said feeding device (1) and having a plurality of vertical frames (4), side-by-side, each supporting superposed crossbars (5) for the support of the bars (2). The structure (3) is vertically slidable step-by-step with respect to the feeding device (1), by the action of the relative lifting and transporting means (11), in such a way as to enable the alignment of the crossbars (5) with the feeding device (1) with the aim of permitting the introduction of the bars (2) into the mobile structure (3) tangentially to the crossbars (5).

## Description

### Description.

The invention relates to an apparatus for stacking and moving metal bars destined for surface hardening treatment.

It is well known that some aluminium alloys in current use in the manufacture of frames must, after the extrusion process, be subjected to heat treatment which will increase their mechanical resistance qualities and enhance their hardness, without which treatment the said alloys would not be of great use.

To this end the extruded shapes, after having been cut into bars of predetermined lengths, are arranged in usually quadrangular metal chests, which in the case of aluminium alloys in particular, consists of an artificial aging treatment.

The bars are arranged in such a way as to realise horizontal layers placed one above the other up until the chests are full. The single layers are vertically distanced one from the other by intermediate crossbars, uniformly distributed along the chest in such a way as to sustain the bars with minimum flexional deformation, while at the same time allowing the air, which acts as a thermo-vector element internally to the thermal treatment furnace, to reach all of the bars contained in the chest.

The use of chests made in this way, apart from creating the disadvantage of requiring many manual movements, is characterised by a series of drawbacks, the main of which is constituted by the fact that the support crossbars of a usual bar level transfer the weight of their load on to the underlying bars.

Consequently to this, the bars nearest the bottom of the chest, which sustain the weight of all the overlying bars, tend to become permanently deformed at the points where they contact the crossbars: since this happens before the heat treatment operation, the bars do not have sufficient resistance to the crushing force.

Such deformations, if not limited by uneconomically loading fewer bars in the chests, are particularly evident in frames which are not later coated with matt paints, but with transparent varnishes or oxide layers obtained with anodising procedures, with characteristic marks that detract from the aesthetic quality of the said frames.

The above-described drawback is aggravated by the bumps and impacts that the chest is subjected to in its transport from and stacking in the cutting area and the thermal treatment area.

A further drawback is constituted by the fact that since the stacking of the bars in the chests is done in proximity to the cutting area, shavings present on some of the bars and subjected to the weight of overlying bars can, during movement of the chests and due to the inevitable jogging of them, mark the delicate surface of the bars which have yet to be heat-treated, with the consequence that some bars have to be discarded after the heat-treatment.

A further drawback is constituted by the fact that the crossbars, being placed in direct contact with the bars of two overlying layers of bars, inevitably obstruct the circulation of the air, which, not being able to reach all of the points of the bars, causes a disunity in mechanical characteristics both between one bar and another and among the different parts of a single bar.

A further drawback is constituted by the fact that with the exception of the most external bars in the chest, the majority of the bars are practically unreachable, if not by emptying the chest, in order to check on the hardness induced by the heat treatment.

The aim of the present invention is that of eliminating the above-mentioned drawbacks. The invention, as it is characterised in the claims, solves the above-described problems by providing an apparatus for the stacking and transport of metallic bars destined for surface hardening treatment comprising:
- a horizontal feeding device of the bars;
- a mobile vertical bar stacking and transport structure, associable to the feeding device and having vertical frames, placed side-by-side and supporting overlying crossbars for the support of the bars at a distance greater than that of their vertical dimensions.

The structure is vertically slidable on activation of relative lifting and transporting means, in such a way as to permit the aligning of the crossbars with the feeding device for the introduction of the bars into the structure tangentially to the crossbars.

The fundamental advantage obtained through the present invention consists essentially of the fact that, since the bars are subject only to their own weight, there is no crushing or other noticeable permanent deformation. Further, the apparatus is not subject to limitations in the height of the bar stack, since the deformability of the said bars is no longer a question of importance.

A further advantage is represented by the fact that the effect of any eventual presence of shavings is minimal, both because of the lower number of the forces in play, due to the weight of a single bar, and to the greater ease with which the said shavings can be removed from the apparatus, and, the apparatus' being inferiorly open, the accumulation of the said shavings on the bars is avoided.

During the heat treatment the hot air can circulate more freely among the bars, giving the advantage of a more uniform and easier heat treatment.

A further advantage is that each of the bars is removable from the mobile support structure with the possibility of checking the bars' mechanical and qualitative characteristics both visually and with instruments, as well as the possibility of easy marking of bars to be discarded at the moment of the extraction from the apparatus for packing and dispatch.

Finally, the apparatus can be advantageously automatised to minimise or even eliminate completely the need for manual interventions.

Further advantages and characteristics of the present invention will better emerge from the detailed description that follows, made with reference to the accompanying drawings, which represent a preferred embodiment here illustrated in the form of a non-limiting example, and in which:
- Figure 1A shows the invention in its entirety in side elevation;
- Figure 1B shows the invention in plan view, seen from above;
- Figure 2 shows the invention, with some parts removed and partially in section according to line II-II of figure 1A and shown in elevation, frontally, at the moment of introduction of the bars;
- Figure 3 shows the invention, with some parts removed, shown in plan view;
- Figure 4 shows a apparatus according to the invention, schematically represented and in partial perspective view and in a first embodiment of an unloading device for the bars;
- Figure 5 shows, in enlarged scale, some constructional details of the invention;
- Figure 6 shows the invention, in elevation, with an unloading device for the bars according to a second embodiment, further to that of figure 4;
- Figures 7A and 7B show, in enlarged scale, some constructional details of the invention.

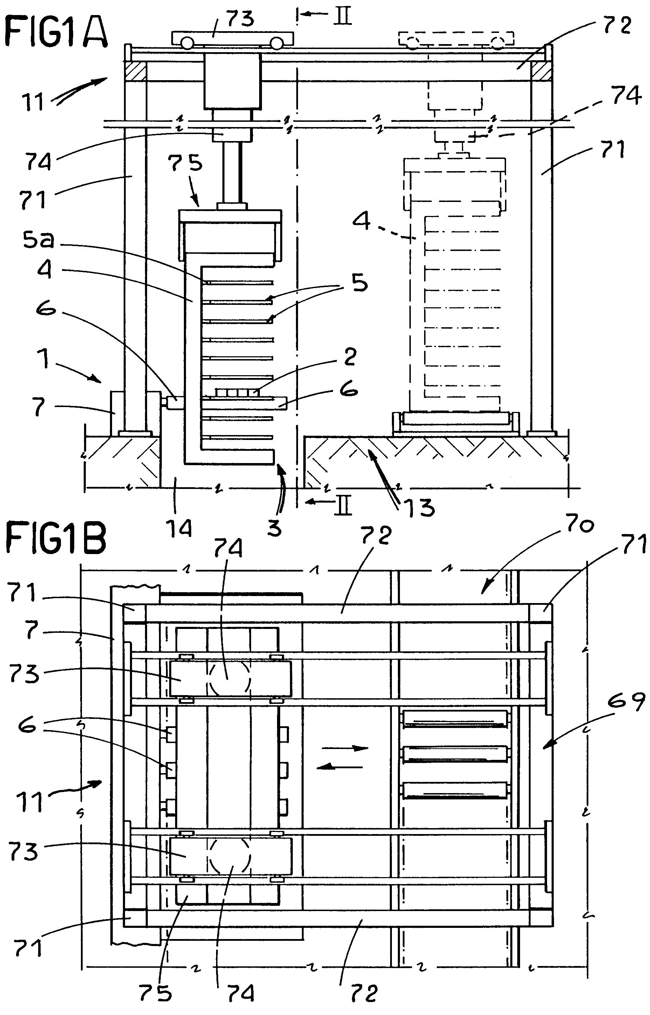

With reference to figures 1A and 1B, the invention consists substantially in a stacking and transporting apparatus 13 for metal bars, preferably aluminium, shaped by extrusion and destined to be heat-treated in a furnace for surface hardening.

The apparatus 13 comprises a feeding device 1 of the bars 2, arranged horizontally, and a mobile vertical stacking structure 3 of the bars 2, associable to the feeding device 1 and vertically slidable internally to a trench 14 by means of relative lifting and transporting means 11.

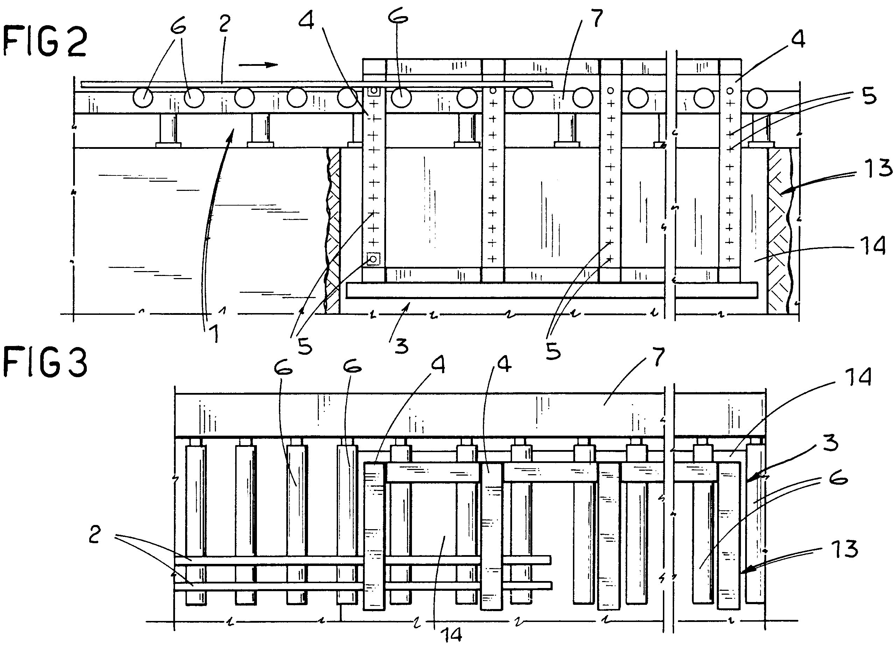

The mobile structure 3 envisages a plurality of vertical frames 4 having open polygonal "C"-shaped border 9, the said frames 4 being positioned side-by-side and superiorly interconnected (figure 2), each supporting a plurality of crossbars 5 for the individual support of the bars 2.

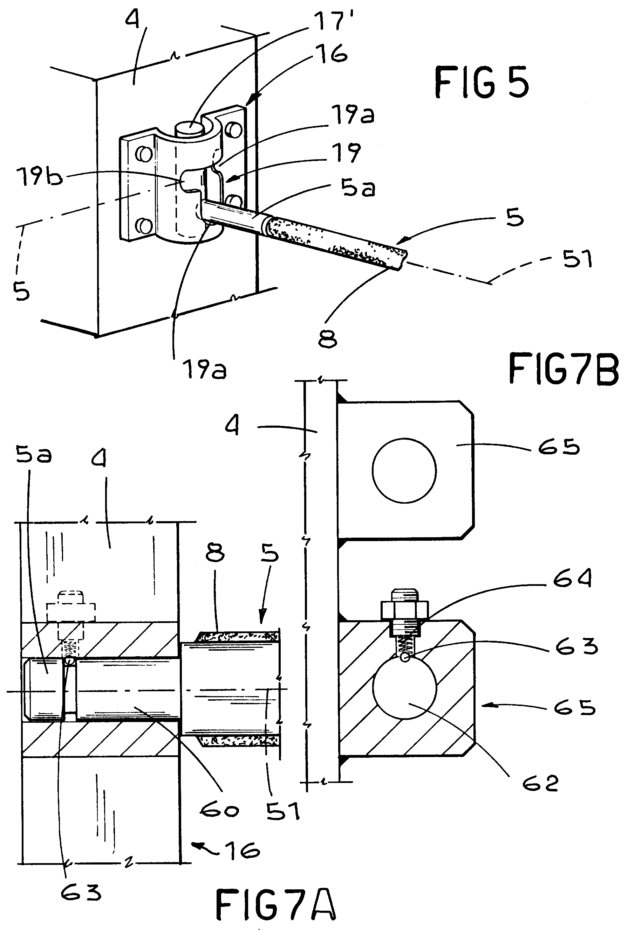

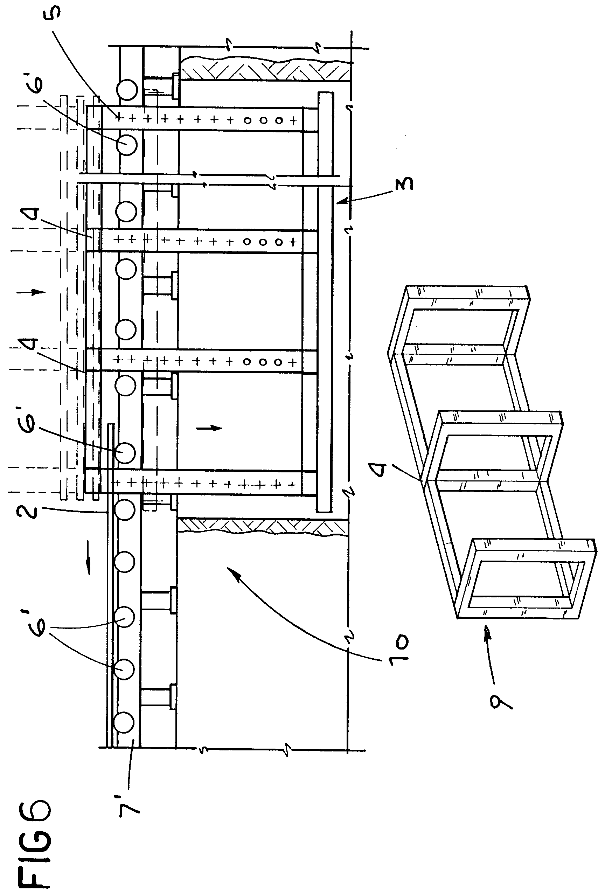

The crossbars 5, preferably circular in section (figure 5), are constrained at one of their ends 5a to the vertical frames 4 so that they are horizontally projectingly supported in a support position of the bars 2 and at a distance from each other which is greater than the maximum vertical dimensions of the bars 2, to allow their independent removal for checking from the mobile structure 3. Further, the crossbars 5 comprise a covering layer 8 in a soft material which is elastically deformable, resistent to heat, and preferably felt, and the said crossbars 5 are connected to the vertical frames 4 by cylindrical hinge articulations 16, with vertical rotation axis (see figure 5).

The cylindrical hinge articulations 16 permit the rotation of the crossbars 5 in the horizontal plane from a stable work position in which they support the bars 2 to a rest position wherein the crossbars 5 are located between one vertical frame 4 and another of the mobile structure 3 with an orientation which is parallel to the bars 2.

In the embodiment shown in figure 5 the cylindrical hinge articulation 16 is obtained by associating a vertical pivot 17', rotatably and slidably solid to a relative crossbar 5, to a support 17'' equipped with a groove 19 having cavities 19a, 19b in which the crossbar 5 is located in a stable position in order to assume the said work and rest positions.

Figures 7A and 7B further show that in one embodiment the crossbars 5 can also be axially removable. For this reason their connection to the vertical frames 4 is made by means of an end pivot 60 equipped with a channel 61 and associable to a corresponding complementary seating 62 of a support 65 solid to the vertical frame 4.

The seating 62 comprises a retaining bearing 63 of the end pivot 60 which retaining bearing 63 is elastically pressed into the channel 61 by a contrasting spring element 64.

The possibility of orientation and removal by sliding of the crossbars 5 permits of varying the versatility of use of the mobile structure 3, enabling the loading of bars 2 with different vertical dimensions and/or exceeding the vertical interaxis of the crossbars 5.

The feeding device 1 of the bars 2 comprises a plurality of horizontal rollers 6, on which the bars 2 advance towards the mobile structure 3. The horizontal rollers 6, preferably motorised, see figures 1A and 3, one projectingly supported by their own fixed support structure 7.

The association of the mobile structure 3 to the feeding device 1 (figures 1A, 2 and 3) is made by means of the interposition of the vertical frames 4 between the horizontal rollers 6.

The lifting and transporting means 11 (figure 1B) comprise a rigid structure 69 with a double portal 70.

Each said portal 70 is equipped with a pair of vertical uprights 71, superiorly connected by a horizontal cross-piece 72.

On the said horizontal cross-piece 72 of each portal 70 cars 73 are arranged, which translate on guides along the horizontal cross-piece 72 and support linear actuators, which actuators are preferably constituted by oleodynamic cylinders 74 and which are connected to a bilaterally and superiorly gripping device 75 of the mobile structure 3.

The rigid structure 69 is characterised by a high overall degree of rigidity in order to avoid that during the movement of the mobile structure 3 the bars 2 might be subjected to shocks and consequent bumps and local deformation.

The said lifting and transporting means 11, by activating the raising or the lowering of the mobile structure 3 internally to the trench 14, permit of aligning the crossbars 5 with the horizontal rollers 6 of the feeding device 1 (figure 1A), thus permitting the introduction of the bars 2 into the mobile structure 3 tangentially to the crossbars 5.

From the functional point of view, by synchronising the feeding of the bars 2 with the activation of the lifting and transporting means 11, it is possible to lift the mobile structure 3 one step at a time, corresponding to the vertical distance of two contiguous crossbars 5, so that the bars 2 met underneath by the crossbars 5, can progressively pass on to the said crossbars 5 from their position on the horizontal rollers 6 of the feeding device 1, and be stacked one by one on the said crossbars 5. It is further possible to regulate the activation time of the feeding device 1 so that the bars 2 can be arranged, independently of their length, in the mobile structure 3 in a position which is exactly baricentric, so that their weight is distributed equally on the two cylinders 74.

When the mobile structure 3, filled with bars 2, arrives at the top of the trench 14, the mobile structure 3 itself is transported by the said lifting and transporting means 11, by means of activation of the cars 73, on to a roller track 80 along which the mobile structure 3, after having been freed by the lifting and transporting means 11, is transported towards a conventional tunnel furnace, not illustrated in the figures.

Internally to the tunnel furnace, the bars 2 undergo the heat treatment which will give them the mechanical resistance and surface hardness necessary for their successive use or application.

A typical functioning sequence of the lifting and transporting means 11 can be summarised as follows:
- the collection of an empty mobile structure 3 from the roller track 80;
- the lifting of a mobile structure 3 from the roller track 80;
- translation of the mobile structure 3 to over the trench 14;
- introduction of the mobile structure 3 into the trench 14;
- step-by-step lifting of the mobile structure 3 with a load of bars 2;
- translation of the mobile structure 3 once more on to the roller track 80.

From the structure of the lifting and transporting means 11 and their operative function, it can therefore be understood that during the movement of the mobile structure 3 both towards the tunnel furnace, and internally to it, the bars 2, not being subjected to stacking, as usually happens in the prior art, are not subjected to any deterioration or surface deformation.

Further, since the crossbars 5 are horizontally sustained by the vertical frames 4 at a reciprocal vertical distance greater than the maximum vertical dimension of the bars 2, the bars 2 when inside the furnace are optimally accessible to the air, so that the heat treatment and the consequent uniformity of the mechanical characteristics of the bars 2 are also optimised.

The apparatus 13 further envisages the possibility for the mobile structure 3 to associate with a bar 2 unloading device 10 which, in a first embodiment illustrated in figure 6, envisages analogously to the feeding device 1 of figure 2 a plurality of motorised horizontal rollers 6', projectingly sustained by a fixed structure support 7', on which the bars 2 can slide and be extracted from the mobile structure 3.

Also in this case the mobile structure 3 is associable to the unloading device 10 by means of the interpositioning of the vertical frames 4 in the rollers 6' so that the rollers 6', during the vertical step-by-step translating of the vertical frames 4, in this case downwards, can meet inferiorly the bars 2, initially supported on the crossbars 5, thus determining the transfer of the bars 2 on to the rollers 6' of the unloading device 10.

Also in this case, by means of synchronisation of the lifting and transporting means 11 with the activation of the unloading device 10, to each descent by one step of the mobile structure 3 corresponds the extraction of the bars 2 arranged on a series of crossbars 5 located at the same level.

In a different embodiment of the preceding, the unloading device 10 of the bars 2 can be associable to the mobile structure 3, being arranged downstream of it. In this case, it will be sufficient that a certain tract of the bars 2 is arranged in the mobile structure 3 in such a way as to project laterally towards the unloading device 10 superiorly to some rollers 6' belonging to the said unloading device 10. When the mobile structure 3 descends, the projecting parts of the bars 2, coming into contact withthe motorised rollers 6', call be removed from the mobile structure 3 longitudinally and tangentially to the crossbars 5.

In this case it is obvious that, to diminish the friction in the contact zone of the bars 2 on the crossbars 5, it is preferable that the said crossbars 5 be rotatable about their own axes 51 (figure 5), especially so as not to provoke deterioration in the covering
layer 8 (if any) of the crossbars 5: the bars 2, by now hardened, are less sensitive at this stage to wear and tear and local deformations.

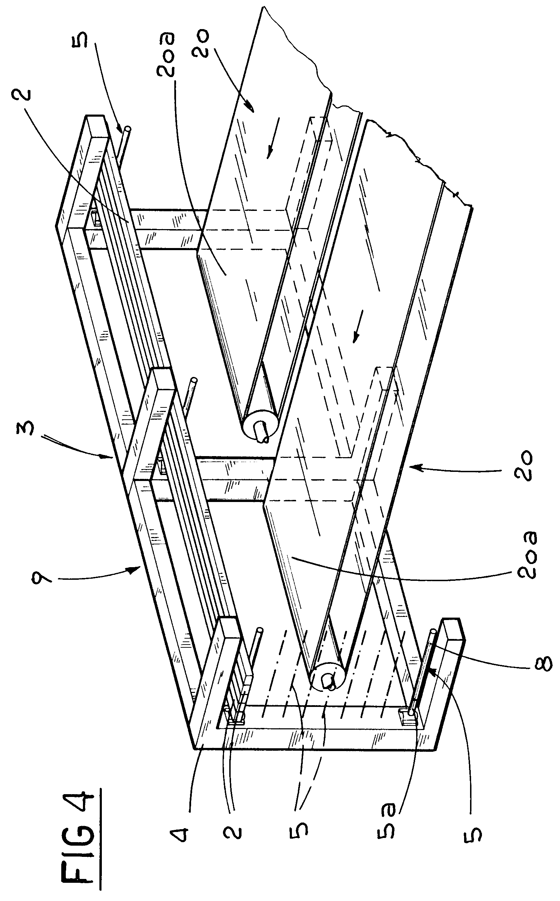

A further embodiment of the unloading device 10, represented in figure 4, envisages the use of conveyor belts 20 associable to the mobile structure 3 with one of their ends 20a for loading the bars 2 arranged between two adjacent vertical frames 4.

The conveyor belts 20 are associated at the open side of the "C"-shaped vertical frames 4 to allow the extraction of the bars 2 from the mobile structure 3 in a tangential and parallel direction to the axes 51 of the crossbars 5.

Relative to the synchronisation of the lifting and transporting means 11 with the feeding device 1 and/or the unloading device 10, this can be done with a large range of known technical solutions which allow different level of automation of the apparatus 13. Among these solutions the use of a programmable logical controller, to establish the succession of activation and de-activation commands of the movemments of the apparatus 13, permits advantageously of eliminating all of the manual operations which at the present time are envisaged by the prior art.

The invention is susceptible to numerous modifications and variants, all falling within the field of the inventive concept. Furthermore, all of the details can be substituted by technically equivalent elements.

Purely as an example, the vertical frames 4 could be made with a closed border 9, with crossbars 5 arranged not projectingly but bilaterally supported to permit, size being equal, of a larger load capacity of the mobile structure 3 (figure 6). A further possible variant is the possibility of locating the bar 2 feeding device 1 upstream of the mobile structure 3. In this case the bars 2 could be introduced longitudinally to the mobile structure 3, tangentially to the crossbars 5, by means of the friction push imparted on them by the rollers 6, necessarily motorised, and starting from the nearest vertical frame 4 to the feeding device 1 up to the furthest said vertical frame 4. Still with the above-described unloading device 10 in mind, and relative to the possibility of making the crossbars 5 removable and rotatable about their own axes 51, as well as covering them with a covering layer 8 of soft material, the present variant of the feeding device 1, though possible, presents the drawback of causing a certain surface stress on the bars 2, which, not having yet undergone surface hardening, could be not insignificantly locally deformed.

## Claims

1. Apparatus for the stacking and transport of metal bars destined to surface hardening treatment, characterised by the fact of comprising:
- at least one horizontal feeding device (1) of the said bars (2);
- a mobile structure (3) for vertically stacking and transporting the said bars (2), associable to the said feeding device (1) and having at least two vertical frames (4), side-by-side, each supporting at least a pair of overlying crossbars (5) for the support of the said bars (2);
- lifting and transporting means (11) associable to the said mobile structure (3) in such a way as to cause it to slide vertically step-by-step with respect to the said feeding device (1), allowing the alignment of the said crossbars (5) with the said feeding device (1) for the introduction of the bars (2) into the mobile structure (3), tangentially to the crossbars (5).

2. An apparatus as in claim 1, characterised by the fact that the said feeding device (1) comprises a plurality of horizontal rollers (6), projecting supported by a fixed support structure (7), on which horizontal rollers (6) the said bars (2) advance, the said mobile structure (3) being associated to the said feeding device (1) by means of the interposition of the vertical frames (4) and the horizontal rollers (6) in such a way as to enable the crossbars (5), during the vertical step-by-step sliding of the vertical frames (4), to meet the bars (2) inferiorly and determine their lifting from the rollers (6) and their stacking in the mobile structure (3).

3. An apparatus, as in claim 1, characterised by the fact that the said feeding device (1) is located upstream of the said mobile structure (3) and comprises a plurality of motorised horizontal rollers (6), on which the bars (2) are arranged.

4. An apparatus as in claim 1, characterised by the fact that the said vertical frames (4) of the mobile structure (3) are, at least superiorly, reciprocally interconnected.

5. An apparatus as in claim 1, characterised by the fact that the said mobile structure (3) comprises a plurality of vertical frames (4) reciprocally interconnected one to the other.

6. An apparatus as in claim 1, characterised by the fact that the said crossbars (5) are constrained at one end (5a) to the said vertical frames (4) so as to be horizontally supported by them, projectingly and in a support position of the said bars (2).

7. An apparatus, as in claim 1, characterised by the fact that the said crossbars (5) comprise a covering layer (8) of soft, elastically deformable material.

8. An apparatus as in claim 1, characterised by the fact that the said vertical frames (4) exhibit a closed polygonal border (9).

9. An apparatus, as in claim 1, characterised by the fact that the said vertical frames (4) exhibit an open polygonal border (9).

10. An apparatus and in claim 1, characterised by the fact of comprising an unloading device (10) of the bars (2) which is associable to the said mobile structure (3), the said unloading device (10) comprising a plurality of horizontal rollers (6'), projectingly supported by a fixed support structure (7'), on which said rollers (6') the said bars (2) advance, the said mobile structure (3) and the said unloading device (10) being reciprocally associated by means of the interposition of the vertical frames (4) between the rollers (6') so as to enable the said rollers (6'), during the vertical donward step-by-step sliding of the vertical frames (4), to meet from below the bars (2), determining thus their removal from the crossbars (5) and their extraction from the mobile structure (3).

11. An apparatus according to claim 1, characterised by the fact of providing, downstream of the said mobile structure (3), an unloading device (10) of the bars (2) comprising a plurality of motorised horizontal rollers (6') which will asociate with the said bars (2), extracting them from the said mobile structure (3) tangentially to the crossbars (5).

12. An apparatus as in claim 1, characterised by the fact that the said mobile structure (3) is associable to a furnace for the heat treatment of the bars (2) and to lifting and transporting means for movement along the said furnace.

13. On apparatus, as inclaim 1, characterised by the fact that the said crossbars (5) have a circular section.

14. An apparatus as in claim 1, characterised by the fact that the said crossbars (5) are connected to the said vertical frames (4) by cylindrical hinge articulations (16) which allow the said crossbars' (5) rotation in a horizontal plane from a stable work position in which the crossbars (5) support the bars (2) to a rest position wherein the crossbars (5) are located between one said vertical frame (4) and another of the mobile structure (3) in a position which is parallel to the bars (2).

15. An apparatus, as in claim 1, characterised by the fact that the said crossbars (5) are rotatable about their own axes (51a).

16. An apparatus, as in claim 1, characterised by the fact that the said crossbars (5) are horizontally supported by the said vertical frames (4) at a reciprocal vertical distance which is greater that the maximum vertical dimension of the said bars (2).

17. An apparatus as in claim 1, characterised by the fact that the said crossbars (5) comprise an end pivot (60), equipped with a channel (61), associable to a corresponding complementary seating (62) made on a support (65) solid to the said vertical frames (4) in such a way as to be axially removable; said seating (62) comprising a retaining bearing (63) for the said end pivot (60), elastically pressed in the channel (61) by a contrasting spring element (64).

18. An apparatus, as in claim 1, characterised by the fact that the said lifting and transporting means (11) comprise a rigid structure (69) having a double portal (70), each said portal (70) being equipped with a pair of vertical uprights (71) superiorly connected by a horizontal cross-piece (72), said lifting and transporting means (11) also comprising cars (73), translatable along the said horizontal cross-pieces (72), which cars (73) support linear actuators (74) of a bilaterally-gripping device (75) of the said mobile structure (3).

19. An apparatus, as in claims 2 or 3, characterised by the fact that the said rollers (6) are motorised.

20. An apparatus as in claim 7, characterised by the fact that the said covering layer (8) is made of felt.

21. An apparatus as in claim 9, characterised by the fact that the said vertical frames (4) are "C"-conformed.

22. An apparatus as in claim 14, characterised by the fact that the said cylindrical hinge articulation (16) comprises a vertical pivot (17'), solid to the said crossbars (5), connected rotatably and slidably to a support (17'') equipped with a groove (19) having two cavities (19a, 19b) for the stable positioning of the said crossbars (5) in the said work and rest positions.

23. An apparatus as in claim 1B, characterised by the fact that the said linear actuators (74) are oleodynamic cylinders.
